(19) Europäisches Patentamt
European Patent Office
Office européen des brevets

(11) EP 4 660 246 A1

(12) **EUROPEAN PATENT APPLICATION**
published in accordance with Art. 153(4) EPC

(43) Date of publication:
**10.12.2025 Bulletin 2025/50**

(21) Application number: **24749983.3**

(22) Date of filing: **19.01.2024**

(51) International Patent Classification (IPC):
***C08L 83/04*** *(2006.01)* ***C08K 3/105*** *(2018.01)*
***C08L 83/05*** *(2006.01)* ***C08L 83/07*** *(2006.01)*

(52) Cooperative Patent Classification (CPC):
**C08K 3/105; C08L 83/04**

(86) International application number:
**PCT/JP2024/001369**

(87) International publication number:
**WO 2024/162030 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.02.2023 JP 2023014566**

(71) Applicant: **Shin-Etsu Chemical Co., Ltd.**
**Tokyo 100-0005 (JP)**

(72) Inventor: **IWATA, Mitsuhiro**
**Annaka-shi, Gunma 379-0224 (JP)**

(74) Representative: **Schicker, Silvia**
**Wuesthoff & Wuesthoff**
**Patentanwälte und Rechtsanwalt PartG mbB**
**Schweigerstraße 2**
**81541 München (DE)**

(54) **HIGHLY THERMALLY CONDUCTIVE SILICONE COMPOSITION AND CURED PRODUCT THEREOF**

(57) The present invention is a highly thermally conductive silicone composition containing, in specific ratios and in specific amounts, (A) an organopolysiloxane, (B) a spherical magnesium oxide powder with an average sphericity of 0.8 or more, an average particle size of 80 to 150 μm, and a purity of 98% by mass or more, (C) a thermally conductive filler including (C-I) a spherical aluminum oxide powder with an average sphericity of 0.8 or more and an average particle size of 7 to 60 μm, a proportion of coarse particles of 96 to 150 μm being 0.1 to 30% by mass of an entirety of the component (C-I) and (C-II) a spherical or irregularly shaped aluminum oxide powder with an average particle size of 0.1 to 4 μm, and having a volume ratio between (C-I) and (C-II) of 2:8 to 8:2, and (D) a cation exchange and/or amphoteric ion exchange type ion-trapping agent, at least one element selected from Zr, Bi, Sb, Mg, and Al being supported on the ion-trapping agent, the highly thermally conductive silicone composition having a thermal conductivity of 7.0 W/m·K or more and a viscosity of 30 to 800 Pa·s. This provides a highly thermally conductive silicone composition that is excellent in insulation, thermal conductivity, moisture resistance, and storage stability.

EP 4 660 246 A1

**Description**

TECHNICAL FIELD

The present invention relates to a silicone composition that is excellent in insulation and thermal conductivity, and in particular, relates to a highly thermally conductive silicone composition excellent in insulation and a cured product thereof that can be incorporated into electronic equipment without damaging heat generating electronic components such as power devices, transistors, thyristors, and CPUs (central processing units) when used as a heat dissipating member for electronic components.

BACKGROUND ART

For heat generating electronic components such as power devices, transistors, thyristors, and CPUs, how to remove the heat generated during use has become an important issue. Conventionally, as a method for such heat removal, it has been common practice to attach heat generating electronic components to heat dissipating fins or metal plates via electrically insulating heat dissipating sheets to release heat, and as such heat dissipating sheets, those in which thermally conductive fillers are dispersed in a silicone resin have been used.

In recent years, the amount of heat generated has increased along with higher integration of circuits in electronic components, and materials having higher thermal conductivity than ever before have been required. In order to improve the thermal conductivity of thermally conductive materials, it has been common practice up to now to have fillers exhibiting high thermal conductivity, such as aluminum oxide (alumina) powder and aluminum nitride powder, contained in the matrix resin (Patent Documents 1 to 4).

Accordingly, in order to improve the thermal conductivity, a technique of a highly thermally conductive resin composition has been disclosed in which the proportion and volume ratio are specified in a composition of a spherical aluminum oxide powder whose average sphericity and hydroxy group amount are specified having an average particle size of 10 to 50 μm and an aluminum oxide powder having an average particle size of 0.3 to 1 μm, but there is a problem of insufficiency in terms of thermal conductivity when the average particle size of the spherical aluminum oxide powder is 50 μm at most (Patent Document 5).

Also, a thermally conductive silicone composition using an alumina powder with an average particle size of 0.1 to 100 μm has been proposed, but no specific thermal conductivity or viscosity is specified. Furthermore, a thermally conductive silicone composition has been disclosed that is specified by a spherical alumina powder with an average particle size of 5 to 50 μm (but not including 5 μm) and a spherical or irregularly shaped alumina powder with an average particle size of 0.1 to 5 μm, with the proportions and weight ratios of the respective aluminum oxides being specified, but, as in the case of Patent Document 5, there is no specification for the average sphericity or the amount of hydroxy groups in the spherical alumina with a larger average particle size, which poses a problem of being insufficient for achieving a high thermal conductivity (Patent Document 6).

Examples of thermally conductive fillers other than aluminum oxide include aluminum, copper, silver, boron nitride, and aluminum nitride. Although they have high thermal performance, they are disadvantageous from a perspective of cost. Furthermore, the use of metal powders such as aluminum, copper, and silver leads to a problem that the insulation of thermally conductive silicone compositions and cured products is reduced.

Meanwhile, the thermal conductivity of magnesium oxide is 42 to 60 W/m·K, which is noteworthy in that it is higher than that of alumina, 26 to 36 W/m·K. In addition, magnesium oxide has a Mohs hardness of 6 and a specific gravity of 3.65, and is lighter than alumina, making it possible to reduce the weight of thermally conductive silicone compositions and cured products. However, magnesium oxide has the disadvantage of high hygroscopicity, and although a thermally conductive silicone rubber composition which contains magnesium oxide that is obtained by baking specific magnesium hydroxide at 1,100 to 1,600°C has been disclosed, there is a problem that the silicone rubber is prone to cracking because it has high hygroscopicity, which results in exhibition of strong alkalinity, for example (Patent Document 7).

Accordingly, a thermally conductive silicone resin composition has been disclosed that is obtained by treating the surface of magnesium oxide with a silazane and is excellent in moisture resistance. However, since the magnesium oxide has a very small particle size of 1 μm, no improvement in thermal conductivity can be expected even if the filling amount is increased, and it has not been verified whether this method exhibits appropriate effectiveness when a powder with a larger particle size is used (Patent Document 8).

A thermally conductive heat dissipating sheet has also been disclosed in which spherical magnesium oxide and granular alumina are combined to improve formability, but magnesium oxide is only used in about 20% by mass at most with respect to the total weight of the thermally conductive filler, and problems such as increased specific gravity and abrasion of the reaction vessel during kneading due to the high content of alumina are not solved (Patent Document 9).

Here, it can be said that a system that uses surface-treated magnesium oxide and alumina in combination is effective in solving the above problems. In addition, by subjecting the surface of magnesium oxide to a hydrophobization

treatment, moisture resistance is improved, and a thermally conductive silicone resin composition also suited for use under high humidity conditions can be obtained. Furthermore, by using magnesium oxide at a volume ratio of 50% or more of the total mass of magnesium oxide and alumina, abrasion of the reaction vessel can be suppressed. Moreover, the specific gravity is lighter in the case where alumina and magnesium oxide are used in combination compared to the case where alumina alone is used as the thermally conductive filler, if in the same filling amount, and therefore, sedimentation of the thermally conductive filler in the thermally conductive silicone composition can be suppressed.

Thus, a thermally conductive silicone composition has been proposed that uses magnesium oxide and alumina in combination to solve the aforementioned problems, but there is no specification for the shape and purity of magnesium oxide, and as long as magnesium oxide with an average particle size of less than 80 μm is used, the composition is also insufficient in terms of thermal conductivity (Patent Document 10).

Furthermore, although a thermally conductive silicone composition has been proposed that uses spherical magnesium oxide and alumina in combination to solve problems in terms of thermal conductivity, the thermally conductive silicone composition lacks storage stability especially because ionic impurities contained in the magnesium oxide cause thickening over time and a curing delay as a curable composition (Patent Document 11).

## CITATION LIST

### PATENT LITERATURE

Patent Document 1: JP 2005-162555 A
Patent Document 2: JP 2003-342021 A
Patent Document 3: JP 2002-280498 A
Patent Document 4: JP 2005-209765 A
Patent Document 5: JP 5755977 B
Patent Document 6: WO 2002/092693 A1
Patent Document 7: JP H5-239358 A
Patent Document 8: JP H7-292251 A
Patent Document 9: JP H8-88488 A
Patent Document 10: JP 6075261 B
Patent Document 11: WO 2020/261958 A1

## SUMMARY OF INVENTION

### TECHNICAL PROBLEM

The present invention has been made in view of the above circumstances, and an object thereof is to provide a highly thermally conductive silicone composition that is excellent in insulation, thermal conductivity, moisture resistance, and even storage stability, and especially to provide a highly thermally conductive silicone composition suitable as a heat dissipating member for electronic components and a cured product thereof.

### SOLUTION TO PROBLEM

In order to solve the problems described above, the present invention provides
a highly thermally conductive silicone composition comprising:

(A) an organopolysiloxane;
(B) a spherical magnesium oxide powder with an average sphericity of 0.8 or more, an average particle size of 80 to 150 μm, and a purity of 98% by mass or more;
(C) a thermally conductive filler comprising (C-I) and (C-II), and the following component (C-I) and component (C-II) being contained in a volume ratio (C-I): (C-II) of 2:8 to 8:2,

(C-I) a spherical aluminum oxide powder with an average sphericity of 0.8 or more and an average particle size of 7 to 60 μm, a proportion of coarse particles of 96 to 150 μm being 0.1 to 30% by mass of an entirety of the component (C-I) in a laser diffraction type particle size distribution; and
(C-II) a spherical or irregularly shaped aluminum oxide powder with an average particle size of 0.1 to 4 μm; and

(D) a cation exchange and/or amphoteric ion exchange type ion-trapping agent, at least one element selected from Zr, Bi, Sb, Mg, and Al being supported on the ion-trapping agent,

wherein the component (B) is 3,300 to 6,500 parts by mass based on 100 parts by mass of the component (A), the component (D) is 0.01 to 10 parts by mass based on 100 parts by mass of the component (A), the component (B) and the component (C) are contained in a volume ratio (B):(C) of 5:5 to 9.5:0.5, and a total amount of the component (B) and the component (C) is 80 to 90% by volume in the composition, and the composition has a thermal conductivity of 7.0 W/m·K or more in a Hot Disk method in accordance with ISO 22007-2, and the composition has a viscosity of 30 to 800 Pa·s at 25°C as measured with a spiral viscometer at a rotational speed of 10 rpm.

Such a composition can provide a highly thermally conductive silicone composition that is excellent in insulation, thermal conductivity, moisture resistance, and even storage stability.

The highly thermally conductive silicone composition can contain 1 to 6% by mass of the component (A) in the composition.

When the component (A) is 1% by mass or more, the viscosity of the resulting composition is appropriate and handling is easy, and when it is 6% by mass or less, the highly thermally conductive silicone composition can achieve a high thermal conductivity well.

In the highly thermally conductive silicone composition, the component (A) can be of an addition reaction curable type containing (A-I) an organopolysiloxane having 0.1 or more silicon atom-bonded alkenyl groups on average in one molecule, of a condensation reaction curable type containing (A-II) an organopolysiloxane having at least 2 silanol groups or silicon atom-bonded hydrolyzable groups in one molecule as the component (A), or of an organic peroxide curable type containing (A-III) an organopolysiloxane having at least 1 silicon atom-bonded alkenyl group in one molecule as the component (A).

As a result of this, there can be favorably provided an addition reaction curable type highly thermally conductive silicone composition, a condensation reaction curable type highly thermally conductive silicone composition, and an organic peroxide curable type highly thermally conductive silicone composition.

The highly thermally conductive silicone composition can further contain (E) a surface treatment agent.

As a result of this, the component (B) and the component (C) can be favorably surface-treated with the surface treatment agent (E).

In this case, (A-I) an organopolysiloxane having 0.1 or more silicon atom-bonded alkenyl groups on average in one molecule or (A-III) an organopolysiloxane having at least 1 silicon atom-bonded alkenyl group in one molecule can be contained as the component (A), and

5 to 900 parts by mass of an organopolysiloxane containing at least 1 silyl group represented by the following general formula (1) in one molecule and having a viscosity of 0.01 to 30 Pa·s at 25°C can be contained as the component (E) based on 100 parts by mass of the component (A-I) or (A-III):

$$-SiR^1_a(OR^2)_{3-a} \qquad (1)$$

wherein $R^1$ is independently an unsubstituted or substituted monovalent hydrocarbon group, $R^2$ is independently an alkyl group, an alkoxyalkyl group, an alkenyl group, or an acyl group, and "a" is 0, 1, or 2.

As a result of this, the component (E) can be more favorably used for the component (A-I) or (A-III).

The present invention can further contain 0.01 to 10% by mass of (F) spherical glass beads or irregularly shaped glass having a maximum value of a median particle size of 160 μm or more and a $SiO_2$ content of 50% by mass or more, in an entire amount of the composition.

By the component (F) being contained, even with a very small amount, the highly thermally conductive silicone composition can be made to have a more moderate thickness.

Furthermore, the present invention can be a cured product of the highly thermally conductive silicone composition.

The cured product of the inventive composition is excellent in insulation, thermal conductivity, moisture resistance, and even storage stability.

ADVANTAGEOUS EFFECTS OF INVENTION

As described above, according to the present invention, there can be provided: a highly thermally conductive silicone composition that is excellent in insulation, thermal conductivity, moisture resistance, and even storage stability; and a cured product thereof.

DESCRIPTION OF EMBODIMENTS

As stated above, there has been a need to develop a highly thermally conductive silicone composition that is excellent in insulation, thermal conductivity, moisture resistance, and even storage stability.

As a result of diligent investigations into the above problems, the present inventors have found that the above problems can be solved by a highly thermally conductive silicone composition with the constitution described below, and the highly thermally conductive silicone composition which has good handleability and workability can be obtained, and furthermore, found that the present composition has excellent storage stability even when a curing agent is contained to form a curable composition, thereby completing the present invention.

That is, the inventive highly thermally conductive silicone composition is
a highly thermally conductive silicone composition comprising:

(A) an organopolysiloxane;
(B) a spherical magnesium oxide powder with an average sphericity of 0.8 or more, an average particle size of 80 to 150 μm, and a purity of 98% by mass or more;
(C) a thermally conductive filler comprising (C-I) and (C-II), and the following component (C-I) and component (C-II) being contained in a volume ratio (C-I): (C-II) of 2:8 to 8:2,

(C-I) a spherical aluminum oxide powder with an average sphericity of 0.8 or more and an average particle size of 7 to 60 μm, a proportion of coarse particles of 96 to 150 μm being 0.1 to 30% by mass of an entirety of the component (C-I) in a laser diffraction type particle size distribution; and
(C-II) a spherical or irregularly shaped aluminum oxide powder with an average particle size of 0.1 to 4 μm; and

(D) a cation exchange and/or amphoteric ion exchange type ion-trapping agent, at least one element selected from Zr, Bi, Sb, Mg, and Al being supported on the ion-trapping agent,

wherein the component (B) is 3,300 to 6,500 parts by mass based on 100 parts by mass of the component (A),
the component (D) is 0.01 to 10 parts by mass based on 100 parts by mass of the component (A),
the component (B) and the component (C) are contained in a volume ratio (B):(C) of 5:5 to 9.5:0.5, and a total amount of the component (B) and the component (C) is 80 to 90% by volume in the composition, and
the composition has a thermal conductivity of 7.0 W/m·K or more in a Hot Disk method in accordance with ISO 22007-2, and the composition has a viscosity of 30 to 800 Pa·s at 25°C as measured with a spiral viscometer at a rotational speed of 10 rpm.

Hereinafter, the present invention will be described in detail, but the present invention is not limited to the description. Note that the "highly thermally conductive silicone composition" may be abbreviated as "silicone composition".

[Component (A)]

The component (A) organopolysiloxane is the main agent of the inventive silicone composition. As groups bonded to silicon atoms in this organopolysiloxane, unsubstituted or substituted monovalent hydrocarbon groups having preferably 1 to 20, more preferably 1 to 6 carbon atoms, are preferable, and examples thereof include linear alkyl groups such as a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an eicosyl group; branched alkyl groups such as an isopropyl group, a tert-butyl group, an isobutyl group, a 2-methylundecyl group, and a 1-hexylheptyl group; cyclic alkyl groups such as a cyclopentyl group, a cyclohexyl group, and a cyclododecyl group; alkenyl groups such as a vinyl group, an allyl group, a butenyl group, a pentenyl group, and a hexenyl group; aryl groups such as a phenyl group, a tolyl group, and a xylyl group; aralkyl groups such as a benzyl group, a phenethyl group, and a 2-(2,4,6-trimethylphenyl)propyl group; halogenated alkyl groups such as a 3,3,3-trifluoropropyl group and a 3-chloropropyl group, a silanol group, and silicon atom-bonded hydrolyzable groups. Alkyl groups, alkenyl groups, aryl groups, and a silanol group are preferable, and a methyl group, a vinyl group, and a phenyl group are particularly preferable.

The viscosity of the component (A) organopolysiloxane at 25°C is not limited, but is preferably in the range of 20 to 100,000 mPa·s, more preferably 50 to 80,000 mPa·s, still more preferably 70 to 50,000 mPa·s, and particularly preferably 100 to 30,000 mPa·s. When the viscosity is 20 mPa·s or more, the physical characteristics of the silicone composition are not degraded and are good, and when 100,000 mPa·s or less, the handling workability of the silicone composition is also good. Note that this viscosity is the value measured with a BM-type viscometer or a BH-type viscometer (for example,

manufactured by TOKYO KEIKI INC.) at 25°C (hereinafter the same applies). Note that the rotor, rotational speed, and rotation time are selected as appropriate depending on the viscosity, in accordance with conventional methods.

The molecular structure of the component (A) organopolysiloxane is not limited, and examples thereof include linear, branched, linear with some branches, and dendritic (dendrimer-shaped), with linear and linear with some branches being preferable. Examples of such an organopolysiloxane include homopolymers having these molecular structures, copolymers composed of these molecular structures, and mixtures of these polymers.

Examples of such a component (A) organopolysiloxane include a dimethylpolysiloxane in which both terminals of the molecular chain are blocked with dimethylvinylsiloxy groups, a dimethylpolysiloxane in which both terminals of the molecular chain are blocked with methylphenylvinylsiloxy groups, a dimethylsiloxane-methylphenylsiloxane copolymer in which both terminals of the molecular chain are blocked with dimethylvinylsiloxy groups, a dimethylsiloxane-methylvinylsiloxane copolymer in which both terminals of the molecular chain are blocked with dimethylvinylsiloxy groups, a dimethylsiloxane-methylvinylsiloxane copolymer in which both terminals of the molecular chain are blocked with trimethylsiloxy groups, a methyl(3,3,3-trifluoropropyl)polysiloxane in which both terminals of the molecular chain are blocked with dimethylvinylsiloxy groups, a dimethylsiloxane-methylvinylsiloxane copolymer in which both terminals of the molecular chain are blocked with silanol groups, a dimethylsiloxane-methylvinylsiloxane-methylphenylsiloxane copolymer in which both terminals of the molecular chain are blocked with silanol groups, and an organosiloxane copolymer composed of a siloxane unit represented by the formula: $(CH_3)_3SiO_{1/2}$, a siloxane unit represented by the formula: $(CH_3)_2(CH_2{=}CH)SiO_{1/2}$, a siloxane unit represented by the formula: $CH_3SiO_{3/2}$, and a siloxane unit represented by the formula: $(CH_3)_2SiO_{2/2}$. Note that in the case of making a condensation reaction curable type composition, it is also possible to use a dimethylpolysiloxane in which both terminals of the molecular chain are blocked with silanol groups, a dimethylsiloxane-methylphenylsiloxane copolymer in which both terminals of the molecular chain are blocked with silanol groups, a dimethylpolysiloxane in which both terminals of the molecular chain are blocked with trimethoxysiloxy groups, a dimethylsiloxane-methylphenylsiloxane copolymer in which both terminals of the molecular chain are blocked with trimethoxysiloxy groups, a dimethylpolysiloxane in which both terminals of the molecular chain are blocked with methyldimethoxysiloxy groups, a dimethylpolysiloxane in which both terminals of the molecular chain are blocked with triethoxysiloxy groups, and a dimethylpolysiloxane in which both terminals of the molecular chain are blocked with trimethoxysilylethyl groups. One of them may be used alone, or two or more of them may be used in combination as appropriate.

In the case where the silicone composition is cured by a hydrosilylation reaction (addition reaction curing), among the component (A), (A-I) an organopolysiloxane having 0.1 or more silicon atom-bonded alkenyl groups on average in one molecule is preferable, an organopolysiloxane having 0.1 or more and 20 or fewer silicon atom-bonded alkenyl groups on average in one molecule is further preferable, an organopolysiloxane having 0.5 or more and 15 or fewer silicon atom-bonded alkenyl groups on average in one molecule is more preferable, and an organopolysiloxane having 0.8 or more and 10 or fewer silicon atom-bonded alkenyl groups on average in one molecule is even more preferable. This is because the resulting silicone composition can be sufficiently cured when the average value of silicon atom-bonded alkenyl groups in one molecule is at or above the lower limit of the above range. The same alkenyl groups as described above are exemplified as the silicon atom-bonded alkenyl groups in this organopolysiloxane, with vinyl groups being preferable. Also, the same linear alkyl groups, branched alkyl groups, cyclic alkyl groups, aryl groups, aralkyl groups, and halogenated alkyl groups as described above are exemplified as groups bonded to silicon atoms other than the alkenyl groups in this organopolysiloxane, with alkyl groups and aryl groups being preferable, and with methyl groups and phenyl groups being particularly preferable.

Note that the average number of silicon atom-bonded alkenyl groups in one molecule of the organopolysiloxane can normally be calculated from the iodine value determined by the Hanus method (a method in which a compound is allowed to act on the Hanus reagent, then allowed to react with an aqueous potassium iodide solution, and the produced iodine is titrated with sodium thiosulfate, in accordance with JIS K 0070).

The method for calculating the average number of silicon atom-bonded alkenyl groups in one molecule of the organopolysiloxane will be described.

The average number of alkenyl groups per molecule is obtained by averaging the number of alkenyl groups per molecule based on the total number of molecules, and for example, it can be calculated according to the following expression, considering alkenyl groups as vinyl groups and determining the vinyl group equivalent of the designed structure.

Number of alkenyl groups (vinyl groups) per molecule = number-average molecular weight (measured value) / vinyl group equivalent of designed structure.

In the case where the designed average unit formula of the organopolysiloxane is known, the average number of alkenyl groups per molecule can be calculated from the theoretical value of the vinyl group equivalent calculated from the

average unit formula and the measured value of the number-average molecular weight (Mn) obtained by gel permeation chromatography (GPC) measurement. Meanwhile, in the case where the designed average unit formula of the organopolysiloxane is not known, the average number of alkenyl groups per molecule can be calculated from the amount of alkenyl contained in a certain amount determined by the above Hanus method and the measured value of the number-average molecular weight obtained by GPC measurement. The number-average molecular weight can be measured by GPC as the value in terms of standard polystyrene.

In the case where the silicone composition is cured by a condensation reaction, among the component (A), it is preferable to use (A-II) an organopolysiloxane having at least 2 silanol groups or silicon atom-bonded hydrolyzable groups in one molecule. Also, it is further preferable to use an organopolysiloxane having 2 or more and 10 or fewer silanol groups or silicon atom-bonded hydrolyzable groups in one molecule. Examples of the silicon atom-bonded hydrolyzable groups in this organopolysiloxane include alkoxy groups such as a methoxy group, an ethoxy group, and a propoxy group; alkenoxy groups such as a vinyloxy group, a propenoxy group, an isopropenoxy group, and a 1-ethyl-2-methylvinyloxy group; alkoxyalkoxy groups such as a methoxyethoxy group, an ethoxyethoxy group, and a methoxypropoxy group; acyloxy groups such as an acetoxy group and an octanoyloxy group; ketoxime groups such as a dimethylketoxime group and a methylethylketoxime group; amino groups such as a dimethylamino group, a diethylamino group, and a butylamino group; aminoxy groups such as a dimethylaminoxy group and a diethylaminoxy group; and amide groups such as a N-methylacetamide group and a N-ethylacetamide group. Also, the same linear alkyl groups, branched alkyl groups, cyclic alkyl groups, alkenyl groups, aryl groups, aralkyl groups, and halogenated alkyl groups as described above are exemplified as groups bonded to silicon atoms other than the silanol groups and silicon atom-bonded hydrolyzable groups in this organopolysiloxane.

In the case where the silicone composition is cured by a free radical reaction by an organic peroxide, the component (A) organopolysiloxane is not limited, but in particular, is preferably (A-III) an organopolysiloxane having at least 1 silicon atom-bonded alkenyl group in one molecule. Also, the organopolysiloxane further preferably has 0.1 or more and 20 or fewer silicon atom-bonded alkenyl groups on average in one molecule. The same alkenyl groups as described above are exemplified as the silicon atom-bonded alkenyl groups in this organopolysiloxane, with vinyl groups being preferable. Also, the same linear alkyl groups, branched alkyl groups, cyclic alkyl groups, aryl groups, aralkyl groups, and halogenated alkyl groups as described above are exemplified as groups bonded to silicon atoms other than the alkenyl groups in this organopolysiloxane, with alkyl groups and aryl groups being preferable, and with methyl groups and phenyl groups being more preferable.

The amount of the component (A) contained is preferably 1 to 6% by mass, and more preferably 1.1 to 5.8% by mass in the silicone composition. When the component (A) is 1% by mass or more, the viscosity of the resulting present composition is appropriate and handling is easy, and when it is 6% by mass or less, the high thermal conductivity of the present composition can be achieved without any difficulty.

[Component (B)]

The component (B) is a spherical magnesium oxide powder with an average sphericity of 0.8 or more, an average particle size of 80 to 150 $\mu$m, and a purity of 98% by mass or more. As long as the above range is satisfied, two or more types with different average particle sizes may be used in combination.

The average sphericity of the magnesium oxide powder is 0.8 or more, and preferably 0.9 or more. Also, the upper limit of the average sphericity can be set to 1, for example, although the higher, the better. If the average sphericity is less than 0.8, flowability may decrease, and in addition, the number of contact locations between particles increases significantly and unevenness of the sheet surface increases, which tends to increase the interfacial thermal resistance and degrade the thermal conductivity.

The average sphericity in the present invention can be determined by importing a particle image photographed with a scanning electron microscope into an image analyzer, such as the trade name "JSM-7500F" manufactured by JEOL Ltd., and measuring the average sphericity in the following manner. That is, the projected area (X) and perimeter (Z) of the particle are measured from the photograph. When the area of a perfect circle corresponding to the perimeter (Z) is defined as (Y), the sphericity of the particle can be expressed as X/Y. Therefore, assuming a perfect circle with the same perimeter as the perimeter (Z) of the sample particle, $Z = 2\pi r$ and $Y = \pi r^2$, resulting in $Y = \pi \times (Z/2\pi)^2$, and the sphericity of individual particles can be calculated as sphericity = $X/Y = X \times 4\pi/Z^2$. The sphericity of 100 arbitrary particles obtained in this manner was determined, and the average value thereof was obtained as the average sphericity (hereinafter the same applies).

The average particle size of the magnesium oxide powder is 80 to 150 $\mu$m, and preferably 90 to 130 $\mu$m. If the average particle size is too small, it tends to be difficult to achieve the high thermal conductivity of the present invention, and if the average particle size is too large, unevenness of the sheet surface increases, which may increase the interfacial thermal resistance and degrade the thermal conductivity. Note that the magnesium oxide powder preferably has a particle size distribution of D90 (90% in the case where the median diameter is defined as D50)/D10 (10% in the case where the median diameter is defined as D50) = 4 or less.

The average particle size in the present invention is a volume-based average particle size that can be measured using, for example, the "laser diffraction type particle size distribution measuring apparatus SALD-2300" manufactured by SHIMADZU CORPORATION. As for the evaluation sample, 50 cc of pure water and 5 g of the thermally conductive powder to be measured are added to a glass beaker, stirred using a spatula, and then subjected to a dispersion treatment with an ultrasonic cleaning machine for 10 minutes. The solution of the thermally conductive material powder that has been subjected to the dispersion treatment is added drop by drop with a dropper to the sampler section of the apparatus and allowed to be stabilized until the absorbance becomes measurable. In this manner, measurement is carried out when the absorbance has become stable. In the laser diffraction type particle size distribution measuring apparatus, the particle size distribution is calculated from the data of light intensity distribution of light diffracted/scattered by the particles detected by the sensor. The average particle size is determined by multiplying the measured particle size value by the relative particle amount (differential %) and dividing by the total of the relative particle amounts (100%). Note that the average particle size is the average diameter of the particles (hereinafter the same applies).

The crystal structure of the magnesium oxide powder is cubic (sodium chloride type structure), and the specific gravity is desirably 3.4 or more. When the specific gravity is 3.4 or more, the proportions of vacancies and low crystal phases present inside the particles are reduced, and thus the thermal conductivity can be increased well. Adjustment of the particle size of the magnesium oxide powder can be carried out by classification and mixing operations.

The purity as the magnesium oxide powder is 98% by mass or more, and more preferably 99% by mass or more. The upper limit of the purity as the magnesium oxide powder can be 100% by mass or less. When the purity as the magnesium oxide powder is below 98% by mass, the resulting thermal conductivity tends to be degraded. Note that examples of impurities in the magnesium oxide include calcium oxide, silicon dioxide, aluminum oxide, and iron oxide. The purity in the present invention can be measured by ICP emission spectrometry (hereinafter the same applies). Furthermore, examples of ionic impurities present in the magnesium oxide powder include $Ca^{2+}$ ions and $Mg^{2+}$ ions. In particular, the amount of $Ca^{2+}$ ions is preferably an amount of 1,000 ppm or less. These ionic contents may cause thickening of the thermally conductive silicone composition over time and a curing delay as a curable composition, and therefore, the addition of a component (D), which will be described later, is required.

Also, it is preferable to treat the surface of the component (B) spherical magnesium oxide powder with a component (E) surface treatment agent, which will be described later, and this further improves the moisture resistance of the inventive highly thermally conductive silicone composition.

The amount of the component (B) contained is 3,300 to 6,500 parts by mass, and preferably 3,400 to 6,200 parts by mass based on 100 parts by mass of the component (A). If the component (B) is more than 6,500 parts by mass, it may be difficult to knead the inventive composition well, and if it is less than 3,300 parts by mass, it may be difficult to achieve the high thermal conductivity of the present invention.

[Component (C)]

The component (C) is an aluminum oxide powder and contains the following components (C-I) and (C-II).

<u>Component (C-I)</u>

The component (C-I) is a spherical aluminum oxide powder with an average sphericity of 0.8 or more and an average particle size of 7 to 60 μm, a proportion of coarse particles of 96 to 150 μm being 0.1 to 30% by mass of an entirety of the component (C-I) in the laser diffraction type particle size distribution. Within these ranges, one type may be used alone or two or more types with different average particle sizes may be used in combination.

The average sphericity of the component (C-I) is 0.8 or more, and preferably 0.9 or more. If the average sphericity is less than 0.8, flowability may decrease, and in addition, the number of contact locations between particles increases significantly and unevenness of the sheet surface increases, which may increase the interfacial thermal resistance and degrade the thermal conductivity.

The average particle size of the component (C-I) is 7 to 60 μm, and preferably 9 to 50 μm. If the average particle size is less than 7 μm, it overlaps with the average particle size of a component (C-II), which will be described later, resulting in fewer contact locations between particles, and an increase in interparticle contact thermal resistance tends to degrade the thermal conductivity, making it impossible to find the advantageous effect of adding the component (C-I). Also, when the average particle size is more than 60 μm, the number of contact locations between particles increases significantly, which tends to increase the interfacial thermal resistance and degrade the thermal conductivity.

The proportion of coarse particles of 96 to 150 μm is 0.1 to 30% by mass, preferably 0.1 to 20% by mass, of an entirety of the component (C-I) in the laser diffraction type particle size distribution of the component (C-I). If the proportion of coarse particles is too large, the number of contact locations between particles increases significantly, which may increase the interfacial thermal resistance and degrade the thermal conductivity, and if the proportion is too small, it may be difficult to achieve the high thermal conductivity of the present invention.

The amount of the component (C-I) contained is preferably 380 to 2,700 parts by mass, and more preferably 400 to 2,500 parts by mass based on 100 parts by mass of the component (A). When the component (C-I) is 2,700 parts by mass or less, the flowability of the present composition does not decrease, and when it is 380 parts by mass or more, the high thermal conductivity of the present invention is also improved.

Component (C-II)

The component (C-II) is an aluminum oxide powder with an average particle size of 0.1 to 4 μm, and may be spherical or irregularly shaped. Note that the non-spherical shapes are irregularly shaped. In the above range, one type may be used alone or two or more types with different average particle sizes may be used in combination.

The average particle size of the component (C-II) is 0.1 to 4 μm, and preferably 0.5 to 2 μm. If the average particle size is less than 0.1 μm, the number of contact locations between particles decreases, and an increase in interparticle contact thermal resistance tends to degrade the thermal conductivity. Also, when the average particle size is more than 4 μm, it overlaps with the average particle size of the above-described component (C-I), thus making it impossible to find the advantageous effect of adding the component (C-II). Note that in the case where the component (C-II) is spherical, the average sphericity is preferably 0.8 or more as in the case of the component (B).

The amount of the component (C-II) contained is preferably 380 to 2,700 parts by mass, and more preferably 400 to 2,500 parts by mass based on 100 parts by mass of the component (A). When the component (C-II) is 2,700 parts by mass or less, the flowability of the present composition does not decrease, and when it is 380 parts by mass or more, the flowability of the present composition is also improved.

The crystal structure of the component (C) aluminum oxide powder may be either monocrystalline or polycrystalline, but the crystal phase is desirably the α phase in terms of high thermal conductivity, and the specific gravity is desirably 3.7 or more. When the specific gravity is 3.7 or more, the proportions of vacancies and low crystal phases present inside the particles are reduced, and thus the thermal conductivity is easily increased. Adjustment of the particle size of the aluminum oxide powder can be carried out by classification and mixing operations. Furthermore, examples of ionic impurities present in the component (C) include $Na^+$ ions. In particular, the amount of $Na^+$ ions is preferably an amount of 100 ppm or less. These ionic contents may cause thickening of the thermally conductive silicone composition over time and a curing delay as a curable composition, and therefore, the addition of a component (D), which will be described later, is required.

Also, it is preferable to treat the surface of the component (C) aluminum oxide powder with a component (E) surface treatment agent, which will be described later, and this tends to reduce the viscosity of the inventive highly thermally conductive silicone composition.

The component (C-I) and the component (C-II) are contained in a volume ratio (C-I):(C-II) of 2:8 to 8:2, and preferably 4:6 to 6:4. If the proportion of the component (C-I) is smaller than 2/10 in volume ratio, the filling ability of the thermally conductive filler (which is the components (B) and (C). Hereinafter the same applies) tends to be degraded. On the other hand, if the proportion of the component (C-I) is larger than 8/10 in volume ratio, it is difficult to densely fill the thermally conductive filler and the thermal conductivity tends to decrease.

The above component (B) and component (C) are contained in a volume ratio (B):(C) of 5:5 to 9.5:0.5, and preferably 5:5 to 9:1. If the proportion of the component (B) is smaller than 5/10 in volume ratio, the thermal conductivity of the silicone composition may be insufficient. On the other hand, if the proportion of the component (B) is larger than 9.5/10 in volume ratio, it is difficult to fill the silicone composition with the thermally conductive filler.

The total amount of the component (B) and the component (C) contained is 80 to 90% by volume, and preferably 80 to 85% by volume in the silicone composition. If the amount contained is less than 80% by volume, the thermal conductivity of the silicone composition may be insufficient, and if it is more than 90% by volume, it is difficult to fill the silicone composition with the thermally conductive filler.

[Component (D)]

The component (D) is a cation exchange and/or amphoteric ion exchange type ion-trapping agent, and is a component that can suppress degradation over time of components (H), (K), and (L), which will be described later, due to $Ca^{2+}$ ions and $Na^+$ ions contained in the component (B) and $Na^+$ ions contained in the component (C) in the inventive composition. Accordingly, anion exchange type trapping agents are not suitable for the present invention. Here, the term "cation exchange and/or amphoteric ion exchange type ion-trapping agent" means an ion-trapping agent constituted by either or both of a cation exchange type ion-trapping agent and an amphoteric ion exchange type ion-trapping agent, and the component (D) may be either a cation exchange type ion-trapping agent or an amphoteric ion exchange type ion-trapping agent, or a combination of both (including a mixture).

The component (D) is characterized by that at least one element selected from Zr, Bi, Sb, Mg, and Al, preferably selected from the elements Zr, Bi, Mg, and Al, and further preferably selected from the elements Zr, Mg, and Al, is supported thereon.

Although the component (D) is not particularly limited in other parts, the support therein is preferably one or two or more selected from hydrotalcites and inorganic ion exchangers such as polyvalent metal acidic salts, for example. Among these, it is particularly preferable to be supported on hydrotalcites from the viewpoint of improving the storage characteristics of the inventive composition.
The amount of the element supported in the component (D) is preferably 0.1 to 10 meq/g, and particularly preferably 1 to 8 meq/g as the total amount of each ion exchanged. Within this range, the storage characteristics of the inventive composition can be improved more effectively. Note that the total amount of ions exchanged is the amount of ions exchanged in 0.1 N hydrochloric acid or a 0.1 N aqueous sodium hydroxide solution.
As the component (D), commercially available products such as IXE-100, IXE-600, IXEPLAS-A1, and IXEPLAS-A2 (manufactured by TOAGOSEI CO., LTD.), for example, can be used.
The amount of the component (D) contained is 0.01 to 10 parts by mass, preferably 0.05 to 8 parts by mass, and further preferably 0.1 to 5 parts by mass based on 100 parts by mass of the component (A). If the component (D) is less than 0.01 parts by mass, degradation of the component (H) over time may not be suppressed, and if the component (D) is more than 10 parts by mass, appropriate curability may not be obtained.

[Component (E)]

In the present invention, it is preferable that (E) a surface treatment agent be further contained and that the component (B) and the component (C) be surface-treated with the surface treatment agent (E). As the surface treatment agent (E), it is preferable to use the following (E-I).

Component (E-I)

The component (E-I) is an organopolysiloxane containing at least 1 silyl group represented by the following general formula (1) in one molecule and having a viscosity of 0.01 to 30 Pa·s at 25°C.

$$-SiR^1_a(OR^2)_{3-a} \qquad (1)$$

In the formula, $R^1$ is independently an unsubstituted or substituted monovalent hydrocarbon group, $R^2$ is independently an alkyl group, an alkoxyalkyl group, an alkenyl group, or an acyl group, and "a" is 0, 1, or 2.
Note that it is preferable to use the component (E-I) in a composition in which an organopolysiloxane having a silicon atom-bonded alkenyl group as the component (A) is used, and in particular, it is preferable to use the component (E-I) in an addition reaction curable type composition in which the above component (A-I) is used as the component (A), or in an organic peroxide curable type composition in which the organopolysiloxane (A-III) having at least 1 silicon atom-bonded alkenyl group in one molecule is used as the component (A).
Examples of the component (E-I) include an organopolysiloxane represented by the following general formula (2).

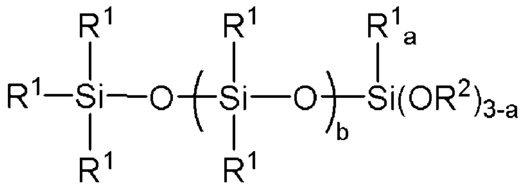

(2)

In the formula, $R^1$ is independently an unsubstituted or substituted monovalent hydrocarbon group, $R^2$ is independently an alkyl group, an alkoxyalkyl group, an alkenyl group, or an acyl group, "b" is an integer of 2 to 100, and "a" is 0, 1, or 2.
In the formulae (1) and (2), $R^1$ is independently an unsubstituted or substituted monovalent hydrocarbon group having preferably 1 to 10, more preferably 1 to 6, and still more preferably 1 to 3 carbon atoms, and examples thereof include linear alkyl groups, branched alkyl groups, cyclic alkyl groups, alkenyl groups, aryl groups, aralkyl groups, and halogenated alkyl groups. Examples of the linear alkyl groups include a methyl group, an ethyl group, a propyl group, a hexyl group, an octyl group, and a decyl group. Examples of the branched alkyl groups include an isopropyl group, an isobutyl group, a tert-butyl group, and a 2-ethylhexyl group. Examples of the cyclic alkyl groups include a cyclopentyl group and a cyclohexyl group. Examples of the alkenyl groups include a vinyl group and an allyl group. Examples of the aryl groups include a phenyl group and a tolyl group. Examples of the aralkyl groups include a 2-phenylethyl group and a 2-methyl-2-phenylethyl group. Examples of the halogenated alkyl groups include a 3,3,3-trifluoropropyl group, a 2-(nonafluorobutyl)ethyl group, and a 2-(heptadecafluorooctyl)ethyl group. $R^1$ is preferably free from aliphatic unsaturated

bonds, and a methyl group and a phenyl group are more preferable.

In the formulae (1) and (2), $R^2$ is independently an alkyl group, an alkoxyalkyl group, an alkenyl group, or an acyl group. Examples of the alkyl group include the same linear alkyl groups, branched alkyl groups, and cyclic alkyl groups as those exemplified in $R^1$. Examples of the alkoxyalkyl group include a methoxyethyl group and a methoxypropyl group. Examples of the alkenyl group include the same as those exemplified in $R^1$. Examples of the acyl group include an acetyl group and an octanoyl group. $R^2$ preferably has 1 to 8 carbon atoms, is more preferably an alkyl group, and is particularly preferably a methyl group or an ethyl group.

"b" is an integer of 2 to 100, and preferably 5 to 50. "a" is 0, 1 or 2, and preferably 0.

Suitable specific examples of the component (E-I) organopolysiloxane can include the following.

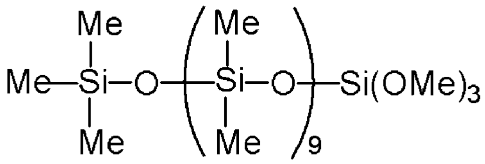

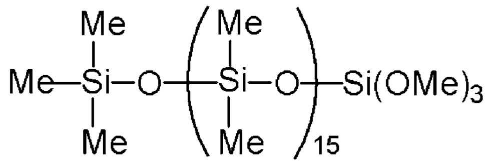

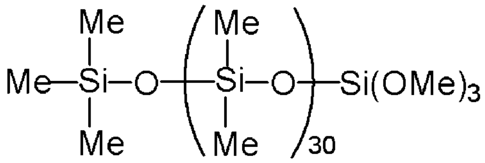

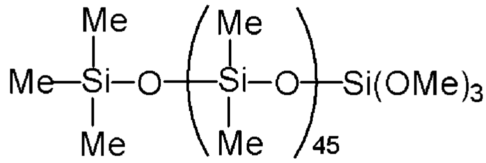

In the formulae, Me is a methyl group.

The viscosity of the component (E-I) organopolysiloxane at 25°C is normally 0.01 to 30 Pa·s, and preferably 0.02 to 10 Pa·s. When the viscosity is 0.01 Pa·s or more, oil bleeding is less likely to occur from the silicone composition and it is less likely to drip. When the viscosity is 30 Pa·s or less, the resulting silicone composition does not have poor flowability, and there is no risk of degraded workability in application.

As the method for surface treatment of the component (B) and the component (C) by the component (E-I), a spray method using a fluid nozzle, a stirring method with shear force, a dry process such as a ball mill or a mixer, or a wet process such as an aqueous or organic solvent-based method can be employed. The stirring method is carried out to the extent that no destruction of the spherical magnesium oxide powder and the aluminum oxide powder occurs. The temperature in the system or the drying temperature after treatment in the dry process is determined as appropriate depending on the type of surface treatment agent and within the range where the surface treatment agent is not volatilized or decomposed, but is preferably 80 to 180°C.

In the case where the component (E-I) is contained, the amount contained is preferably 5 to 900 parts by mass, more preferably 50 to 700 parts by mass, and further preferably 100 to 500 parts by mass based on 100 parts by mass of the component (A). When the component (E-I) is 5 parts by mass or more, viscosity is lowered and kneading can be performed well, and when it is 900 parts by mass or less, the amount of (E-I) bleeding out from the present composition is also low.

Component (E-II)

As the component (E), a component (E-II) can be further used. The component (E-II) is a silane coupling agent, and examples of the silane coupling agent include vinyl silane coupling agents, epoxy silane coupling agents, acrylic silane coupling agents, and long chain alkyl silane coupling agents with a carbon chain of 6 or more. One of them may be used alone, or two or more of them may be used in combination as appropriate. In particular, long chain alkyl silane coupling agents are preferable, and decyltrimethoxysilane is more preferable.

As the method for surface treatment of the component (B) and the component (C) by the component (E-II), a spray method using a fluid nozzle, a stirring method with shear force, a dry process such as a ball mill or a mixer, or a wet process such as an aqueous or organic solvent-based method can be employed. The stirring method is carried out to the extent that no destruction of the spherical magnesium oxide powder and the aluminum oxide powder occurs. The temperature in the system or the drying temperature after treatment in the dry process is determined as appropriate depending on the type of surface treatment agent and within the range where the surface treatment agent is not volatilized or decomposed, but is preferably 80 to 180°C.

In the case where the component (E-II) is contained, the amount used is preferably 0.1 to 5 parts by mass based on 100 parts by mass of the total of the component (B) and the component (C). When it is 0.1 parts by mass or more, the advantageous effect is sufficient, and when it is 5 parts by mass or less, the advantageous effect commensurate with the amount used is exhibited.

[Component (F)]

In the inventive highly thermally conductive silicone composition, (F) spherical glass beads or irregularly shaped glass can be further contained that has a maximum value of a median particle size (median diameter $D_{50}$) of 160 μm or more and a $SiO_2$ content of 50% by mass or more. By the component (F) being contained, even with a very small amount, the highly thermally conductive silicone composition can be made to have a moderate thickness.
The maximum value of the median particle size of the component (F) is 160 μm or more, and preferably 160 to 300 μm, which is characterized by being larger than the average particle size of the component (B). When the maximum value of the median particle size is 160 μm or more, the desired thickness can be ensured well. Note that measurement of the median particle size can be performed by the laser diffraction method using, for example, the "laser diffraction type particle size distribution measuring apparatus SALD-2300" manufactured by SHIMADZU CORPORATION.
The $SiO_2$ content in the component (F) is preferably 50% by mass or more, and more preferably 50 to 99.99% by mass. When the $SiO_2$ content is 50% by mass or more, there is no risk that the desired thickness cannot be ensured due to brittleness. Note that the $SiO_2$ content can be measured by ICP emission spectrometry.
Examples of the material of the component (F) include soda lime glass, soda lime silica glass, and borosilicate glass. From the viewpoint of uniformity of cured thickness, the component (F) is preferably spherical rather than irregularly shaped, and in the case where the component (F) is spherical glass beads, the average sphericity is preferably 0.8 or more as in the case of the components (B) and (C).
In the case where the component (F) is contained, it is preferable to add it in a small amount in the above range, and specifically, in order not to significantly reduce the thermal conductivity of the highly thermally conductive silicone composition, 0.01 to 10% by mass is preferable, and 0.01 to 5% by mass is more preferable in the entire amount of the silicone composition.
The inventive highly thermally conductive silicone composition may be used as it is, or a curing agent may be further contained to form a curable composition.
When made into a curable highly thermally conductive silicone composition, the following three forms are available. The organopolysiloxane of the above components (A-I) to (A-III) can be used as the base polymer, organopolysiloxane (A) component, and the spherical magnesium oxide powder (B) and aluminum oxide powder (C) described above can be contained.
[i] Addition reaction curable type highly thermally conductive silicone composition
[ii] Condensation reaction curable type highly thermally conductive silicone composition
[iii] Organic peroxide curable type highly thermally conductive silicone composition

In particular, the [i] addition reaction curable type highly thermally conductive silicone composition is preferable since it is cured quickly and no byproduct is generated. Hereinafter, each of the compositions will be specifically described.

[i] Addition reaction curable type highly thermally conductive silicone composition

In the case where the silicone composition is an addition reaction curable type highly thermally conductive silicone composition that is cured by a hydrosilylation reaction, the component (A-I) shown above is used as the above component (A), and furthermore, the composition contains the following components and the curing agent is the following components (G) and (H):

(G) an organohydrogen polysiloxane having at least 2 hydrogen atoms directly bonded to silicon atoms;
(H) a platinum group metal-based curing catalyst; and as necessary,

(I) an addition reaction controlling agent.

[Component (G)]

The organohydrogen polysiloxane (G) having at least 2 hydrogen atoms directly bonded to silicon atoms is a component that acts as a crosslinking agent.
The same linear alkyl groups, branched alkyl groups, cyclic alkyl groups, aryl groups, aralkyl groups, and halogenated alkyl groups as in the case of the component (A) are exemplified as groups bonded to silicon atoms other than the hydrogen atoms in the organohydrogen polysiloxane, with alkyl groups and aryl groups being preferable, and with methyl groups and phenyl groups being particularly preferable.
Although the viscosity of the component (G) at 25°C is not limited, it is preferably in the range of 1 to 100,000

mPa·s, and more preferably in the range of 5 to 5,000 mPa·s.

The molecular structure of the component (G) is not limited, and examples thereof include linear, branched, linear with some branches, cyclic, and dendritic (dendrimer-shaped). Also, the component (G) has at least 2, preferably 2 to 50, hydrogen atoms directly bonded to silicon atoms in the molecule, which may be at terminals of the molecular chain, in the middle of the molecular chain, or at both. Examples of such an organopolysiloxane include homopolymers having these molecular structures, copolymers composed of these molecular structures, and mixtures of these.

Examples of the component (G) include a dimethylpolysiloxane in which both terminals of the molecular chain are blocked with dimethylhydrogensiloxy groups, a dimethylsiloxane-methylhydrogensiloxane copolymer in which both terminals of the molecular chain are blocked with trimethylsiloxy groups, a dimethylsiloxane-methylhydrogensiloxane copolymer in which both terminals of the molecular chain are blocked with dimethylhydrogensiloxy groups, and an organosiloxane copolymer composed of a siloxane unit represented by the formula: $(CH_3)_3SiO_{1/2}$, a siloxane unit represented by the formula: $(CH_3)_2HSiO_{1/2}$, and a siloxane unit represented by the formula: $SiO_{4/2}$, and one of them may be used alone, or two or more of them may be used in combination as appropriate.

Note that the component (G) organohydrogen polysiloxane is different from the organopolysiloxane component (A-I) having silicon atom-bonded alkenyl groups, and is also different from the component (A-II) in that it does not contain hydrolyzable groups.

The amount of the component (G) contained is the amount required to cure the silicone composition, and specifically, it is preferably in an amount where the silicon atom-bonded hydrogen atoms in the component (G) are within the range of 0.1 to 10 moles, further preferably within the range of 0.1 to 5 moles, and particularly preferably within the range of 0.1 to 3 moles, with respect to 1 mole of the silicon atom-bonded alkenyl groups in the component (A-I). This is because, when the content of the present component is in an amount at or above the lower limit of the above range, the resulting silicone composition can be sufficiently cured, while when the content is at or below the upper limit of the above range, the resulting silicone cured product can avoid becoming very hard, and avoid generation of numerous cracks on the surface.

[Component (H)]

The platinum group metal-based curing catalyst (H) is a catalyst for promoting curing of the silicone composition, and examples thereof include chloroplatinic acid, an alcohol solution of chloroplatinic acid, an olefin complex of platinum, an alkenylsiloxane complex of platinum, and a carbonyl complex of platinum.

The amount of the component (H) contained is the amount required to cure the silicone composition, and specifically, it is preferably in an amount where the platinum group metal in the component (H) is within the range of 0.01 to 1,000 ppm, and particularly preferably within the range of 0.1 to 500 ppm, in mass unit with respect to the component (A-I). This is because, when the amount of the component (H) contained is at or above the lower limit of the above range, the resulting silicone composition can be sufficiently cured, while in the case where the amount contained is at or below the upper limit of the above range, the curing speed of the resulting silicone composition is improved well without waste.

[Component (I)]

The addition reaction controlling agent (I) (curing reaction suppressing agent) can be contained for regulating the curing speed of the silicone composition and improving the handling workability. Examples of the curing reaction suppressing agent include acetylene compounds such as 2-methyl-3-butyn-2-ol, 2-phenyl-3-butyn-2-ol, and 1-ethynyl-1-cyclohexanol; en-yne compounds such as 3-methyl-3-penten-1-yne and 3,5-dimethyl-3-hexen-1-yne; and others such as hydrazine compounds, phosphine compounds, and mercaptan compounds, and one of them may be used alone, or two or more of them may be used in combination as appropriate.

In the case where the component (I) is contained, the amount contained is not particularly limited, but 0.0001 to 1% by mass in the silicone composition is preferable. With the above range, the workability and the curing speed of the silicone composition are more suitable.

[ii] Condensation reaction curable type highly thermally conductive silicone composition

In the case where the silicone composition is a condensation reaction curable type highly thermally conductive silicone composition, the component (A-II) shown above is used as the above component (A), and furthermore, the composition contains the following components and the curing agent is the following component (J):

(J) a silane having at least 3 silicon atom-bonded hydrolyzable groups in one molecule, or a partially hydrolyzed product thereof; and
as necessary,

(K) a catalyst for condensation reaction.

[Component (J)]

The silane (J) having at least 3 silicon atom-bonded hydrolyzable groups in one molecule, or partially hydrolyzed product thereof is a component that acts as a curing agent. The same alkoxy groups, alkoxyalkoxy groups, acyloxy groups, ketoxime groups, alkenoxy groups, amino groups, aminoxy groups, and amide groups as described above are exemplified as the silicon atom-bonded hydrolyzable groups in the silane. Also, in addition to the above hydrolyzable groups, for example, the same linear alkyl groups, branched alkyl groups, cyclic alkyl groups, alkenyl groups, aryl groups, aralkyl groups, and halogenated alkyl groups as in the case of the component (A) may be bonded to silicon atoms in this silane.
Examples of such a silane or partially hydrolyzed product thereof include methyltriethoxysilane, vinyltriethoxysilane, vinyltriacetoxysilane, and ethyl orthosilicate.
The amount of the component (J) contained is the amount required to cure the silicone composition, and specifically, it is preferably within the range of 0.01 to 20 parts by mass, and particularly preferably within the range of 0.1 to 10 parts by mass based on 100 parts by mass of the component (A-II). When the content of this silane or partially hydrolyzed product thereof is in an amount at or above the lower limit of the above range, there is no risk of a decrease in the storage stability of the resulting silicone composition, while when the content is in an amount at or below the upper limit of the above range, there is no risk of slower curing of the resulting silicone composition.

[Component (K)]

The catalyst (K) for condensation reaction is an optional component, and for example, in the case where a silane having hydrolyzable groups such as aminoxy groups, amino groups, or ketoxime groups is used as the curing agent, it is not essential.
Examples of such a catalyst for condensation reaction include organotitanate esters such as tetrabutyl titanate and tetraisopropyl titanate; organotitanium chelate compounds such as titanium diisopropoxybis(acetylacetate) and titanium diisopropoxybis(ethylacetoacetate); organoaluminum compounds such as aluminum tris(acetylacetonate) and aluminum tris(ethylacetoacetate); organoaluminum compounds such as zirconium tetra(acetylacetonate) and zirconium tetrabutyrate; organotin compounds such as dibutyltin dioctoate, dibutyltin dilaurate, and butyltin-2-ethylhexoate; metal salts of organocarboxylic acids such as tin naphthenate, tin oleate, tin butylate, cobalt naphthenate, and zinc stearate; amine compounds such as hexylamine and dodecylamine phosphate, and salts thereof; quaternary ammonium salts such as benzyltriethylammonium acetate; lower fatty acid salts of alkali metals such as potassium acetate and lithium nitrate; dialkylhydroxylamines such as dimethylhydroxylamine and diethylhydroxylamine; and guanidyl group-containing organosilicon compounds.
In the case where the component (K) is contained, the amount thereof contained may be the amount required to cure the silicone composition, and specifically, it is preferably within the range of 0.01 to 20 parts by mass, and particularly preferably within the range of 0.1 to 10 parts by mass based on 100 parts by mass of the component (A). This is because, in the case where the component (K) is used, when the content of this catalyst is in an amount at or above the lower limit of the above range, the resulting silicone composition is sufficiently easily cured, while when the content is at or below the upper limit of the above range, the storage stability of the resulting silicone composition is less likely to decrease.

[iii] Organic peroxide curable type highly thermally conductive silicone composition

In the case where the silicone composition is an organic peroxide curable type highly thermally conductive silicone composition, the component (A-III) shown above is used as the above component (A), and furthermore, the composition contains the following component and the curing agent is the following component (L):
(L) an organic peroxide.

[Component (L)]

Examples of the organic peroxide (L) include benzoyl peroxide, dicumyl peroxide, 2,5-dimethylbis(2,5-tert-butylperoxy) hexane, di-tert-butyl peroxide, and tert-butyl perbenzoate.
The amount of the component (L) contained is the amount required to cure the silicone composition, and specifically, it is preferably in the range of 0.1 to 5 parts by mass based on 100 parts by mass of the above component (A-III) organopolysiloxane. When the amount of the component (L) contained is at or above the lower limit of the above range, the resulting silicone composition is sufficiently cured. On the other hand, even if contained in an amount exceeding the upper limit of the above range, the curing speed of the resulting silicone composition is not significantly improved, but rather there is a risk of causing voids.

Furthermore, the inventive silicone composition may also contain, as other optional components, for example, fillers such as fumed silica, precipitated silica, and fumed titanium oxide, and fillers formed by subjecting the surface of these fillers to a hydrophobization treatment with an organosilicon compound; adhesion imparting agents such as 3-glycidoxypropyltrimethoxysilane and 3-methacryloxypropyltrimethoxysilane; and others such as pigments, dyes, fluorescent dyes, heat resistant additives, flame resistance imparting agents such as triazole compounds, and plasticizers. Note that, in the present invention, thermally conductive fillers other than the components (B) and (C) may be contained, and examples thereof include aluminum powder, copper powder, silver powder, nickel powder, gold powder, zinc oxide powder, boron nitride powder, aluminum nitride powder, diamond powder, and carbon powder.

The inventive silicone composition can be prepared by uniformly mixing a predetermined amount of each of the above components. For example, in the case of a one-part composition, it can be produced by a method in which the components (A), (B), (C), and (D) are mixed to obtain a mixture (production method 1), a method in which the components (A), (B), (C), and (D) are mixed to obtain a mixture, and then the component (E) is mixed into the mixture (production method 2), or a method in which the components (A), (B), (C), (D), and (E) are mixed at the same time (production method 3). The mixing can be carried out by a known method. Also, when the surface of the components (B) and (C) is treated with the components (A) and (E), in order to promote that treatment, a heating treatment may be performed at 150°C, for example.

Although there is no particular restriction on the method for adding the component (F), it is preferable to add and mix the components (A), (B), (C), (D), and (E) and then add and mix the component (F), and the mixing can be performed by a known method. Furthermore, a step of mixing an optional component may be included.

[Highly thermally conductive silicone composition]

The highly thermally conductive silicone composition has a thermal conductivity of 7.0 W/m·K or more, more preferably 8.0 W/m·K or more, in the Hot Disk method in accordance with ISO 22007-2. There is no particular limitation on the upper limit, and the higher, the better, but it can be set to 12.0 W/m·K or less. When the thermal conductivity is less than 7.0 W/m·K, the target of the present invention, a highly thermally conductive silicone composition that is excellent in thermal conductivity, cannot be obtained. The measurement temperature is 25°C.

Note that, in order to allow the inventive highly thermally conductive silicone composition to have a thermal conductivity of 7.0 W/m·K or more, the components (A) to (C) described above are used in specific proportions, and in particular, the volume ratio between the component (B) and the component (C) is set to 5:5 to 9.5:0.5, and the total amount of the component (B) and the component (C) is set to 80 to 90% by volume in the composition, thereby achieving the above thermal conductivity.

Also, the highly thermally conductive silicone composition has a viscosity of 30 to 800 Pa·s, preferably 50 to 600 Pa·s, at 25°C as measured with a spiral viscometer at a rotational speed of 10 rpm. If the viscosity is too low, the present composition may not be able to retain its predetermined shape, and if the viscosity is too high, the present composition tends to be difficult to apply.

Note that, in order to allow the inventive highly thermally conductive silicone composition to have a viscosity in the above range, the components (A) to (C) described above are used in specific proportions, and the amount contained and the viscosity of the component (A) are further adjusted, thereby achieving the viscosity of the highly thermally conductive silicone composition at 25°C in the above range.

[Cured product]

In the case where the silicone composition is curable, there is no limitation on the method for curing it. For example, the silicone composition may be formed and then left at normal temperature, or the silicone composition may be formed and then heated to 40 to 200°C. Also, the properties of the silicone rubber (silicone elastomer formed article) obtained in this manner are not limited, but examples thereof include gel-like, low hardness rubber-like, and high hardness rubber-like. Note that the cured thickness of the resulting silicone rubber is preferably 100 μm to 2 mm, considering the heat dissipating characteristics of the inventive silicone composition.

EXAMPLES

Hereinafter, the present invention will be described specifically with reference to Examples and Comparative Examples, but the present invention is not limited by the following Examples. Note that, in the formulae below, Me is a methyl group.

The components used in Examples and Comparative Examples will be listed below.

Component (A)

A-1: Dimethylpolysiloxane having a viscosity of 400 mPa·s at 25°C, having a specific gravity (25°C) of 0.98, having both terminals blocked with dimethylvinylsiloxy groups, and having a vinyl (Vi) group amount of 0.018 mol/100 g (having 2.0 silicon atom-bonded alkenyl groups on average in one molecule) [component (A-I)]
A-2: KF-54 manufactured by Shin-Etsu Chemical Co., Ltd., dimethylsiloxane-diphenylsiloxane copolymer in which both terminals of the molecular chain are blocked with trimethylsiloxy groups, having a specific gravity (25°C) of 1.07 and a kinematic viscosity (25°C) of 400 $mm^2/s$ A-3: KF-50-1,000cs manufactured by Shin-Etsu Chemical Co., Ltd., dimethylsiloxane-diphenylsiloxane copolymer in which both terminals of the molecular chain are blocked with trimethylsiloxy groups, having a specific gravity (25°C) of 1.00 and a kinematic viscosity (25°C) of 1,000 $mm^2/s$

The kinematic viscosities are all values at 25°C measured with an Ostwald viscometer.

Component (B)

Spherical magnesium oxide having the properties shown in Table 1 below

[Table 1]

| | Average sphericity | Average particle size (μm) | Purity (% by mass) | Specific gravity |
|---|---|---|---|---|
| B-1 | 0.90 | 94 | 99.0 | 3.4 |
| B-2 | 0.90 | 120 | 98.5 | 3.4 |
| B-3 (comparative product) | 0. 90 | 68 | 99.2 | 3.4 |
| B-4 (comparative product) | 0.70 | 96 | 98.7 | 3.4 |

Component (C)

Spherical or irregularly shaped aluminum oxide having the properties shown in Table 2 below

[Table 2]

| | Average sphericity | Average particle size (μm) | Proportion of coarse particles*1 (% by mass) | Shape | Specific gravity |
|---|---|---|---|---|---|
| C-1 [component (C-I)] | 0.90 | 11.2 | 0.2 | Spherical | 4.0 |
| C-2 [component (C-II)] | - | 0.9 | - | Irregularly shaped | 4.0 |
| C-3 (comparative product) | 0.90 | 5.9 | 0.1 | Spherical | 4.0 |
| C-4 (comparative product) | - | 0.01 | - | Irregularly shaped | 4.0 |
| *1: Proportion of coarse particles of 96 to 150 μm in laser diffraction type particle size distribution | | | | | |

Component (D)

D-1: Amphoteric ion exchange type ion-trapping agent IXEPLAS-A1 having a bulk specific gravity (25°C) of 0.25 and having Zr, Mg, and Al elements supported (manufactured by TOAGOSEI CO., LTD.)

D-2 (comparative): Anion exchange type ion-trapping agent IXE500 having a bulk specific gravity (25°C) of 0.73 and having a Bi element supported (manufactured by TOAGOSEI CO., LTD.)

Component (E)

E-1: Methylpolysiloxane in which one terminal is blocked with a trimethoxysiloxy group, represented by the following formula, having a specific gravity (25°C) of 0.97 and a viscosity of 30 mPa·s at 25°C

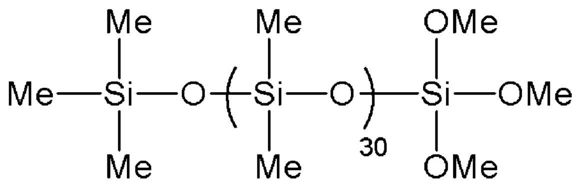

Component (F)

F-1: The MIL particle size series M-9 manufactured by Potters-Ballotini Co., Ltd. with a specific gravity (25°C) of 2.5 (the maximum value of the median particle size is 180 μm), spherical glass beads with a $SiO_2$ content of 99.4% by mass (material: soda lime glass)

Component (G)

G-1: Methylhydrogenpolysiloxane represented by the following formula, having a specific gravity (25°C) of 0.97 and a viscosity of 28 mPa·s at 25°C

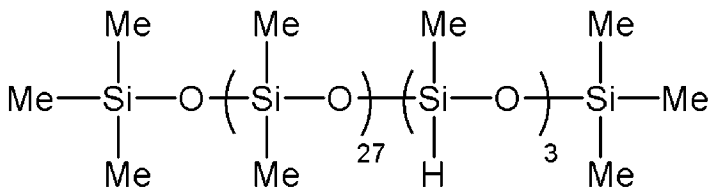

G-2: Methylhydrogenpolysiloxane represented by the following formula, having a specific gravity (25°C) of 0.97 and a viscosity of 17 mPa·s at 25°C

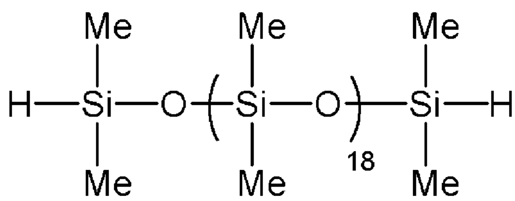

Component (H)

H-1: Chloroplatinic acid-1,3-divinyltetramethyldisiloxane complex with a specific gravity (25°C) of 1.00 and a platinum concentration of 1% by mass

Component (I)

I-1: A 50 mass% solution of 1-ethynyl-1-cyclohexanol in toluene with a specific gravity (25°C) of 0.92

[Examples 1 to 7 and Comparative Examples 1 to 8]

Using the above components in the amounts shown in Tables 3 and 4, silicone compositions were prepared by the method shown below, and thermally conductive formed products were obtained using these silicone compositions. Using them, the initial viscosity, hardness after curing, and thermal conductivity were evaluated by the methods shown below. The results are also listed in Tables 3 and 4.

[Method for preparing silicone composition]

The above components (A) to (I) were mixed in the amounts contained shown in Tables 3 and 4 as follows to obtain compositions of Examples 1 to 7 and Comparative Examples 1 to 8. That is, the components (A), (B), (C), and (E) were placed in a 5-liter gate mixer (manufactured by INOUE MFG., INC., trade name: 5-liter planetary mixer) in the amounts contained shown in Tables 3 and 4, and the mixture was deaerated, heated, and mixed for 2 hours at 150°C. Thereafter, the mixture was cooled to normal temperature (25°C), the components (D) and (H) were added, and the mixture was mixed to uniformity at room temperature (25°C). Subsequently, the component (I) was added and the mixture was mixed to uniformity at room temperature (25°C). Furthermore, the component (G) was added, and the mixture was deaerated and mixed to uniformity at room temperature (25°C). Also, the component (F) was added as necessary, and the mixture was deaerated and mixed to uniformity at room temperature (25°C).

For the compositions obtained in this manner, the initial viscosity, hardness after curing, and thermal conductivity were evaluated by the methods shown below. The results are also listed in Tables 3 and 4.

[Evaluation of initial viscosity]

The initial viscosity of the silicone composition was the value at 25°C and was measured using a spiral viscometer: Malcom viscometer (Type PC-10AA, rotational speed 10 rpm).

[Evaluation of hardness after curing]

The silicone composition was poured into a mold so that the cured thickness was 6 mm, and cured at 100°C for 1 hour. Next, two sheets of the cured product with a thickness of 6 mm were stacked, and the hardness was measured with an Asker C hardness tester.

[Evaluation of thermal conductivity]

The thermal conductivity of the silicone composition before curing was measured at 25°C using the Hot Disk thermophysical property measuring apparatus TPS 2500 S manufactured by Kyoto Electronics Manufacturing Co., Ltd. (the Hot Disk method in accordance with ISO 22007-2).

[Evaluation of storage property]

In each of Examples and Comparative Examples, the viscosity, thermal conductivity, and hardness were observed after 6 months of storage at 5°C. In Comparative Examples 3 and 4, although no significant change in thermal conductivity was observed compared to the initial values, the viscosity was clearly higher than the initial viscosity, and the hardness was significantly reduced by 10 points or more compared to the initial hardness, indicating the occurrence of a curing delay.

As shown in Table 3 and Table 4, the viscosity, thermal conductivity, hardness, and their storage property after 6 months of storage at 5°C all exhibited good results in each of Examples of the present invention.

On the other hand, in Comparative Example 1, the average particle size of the component (B-3) was small, resulting in a low thermal conductivity. In Comparative Example 2, the average sphericity of the component (B-4) was low, resulting in a low thermal conductivity. In Comparative Example 3, the component (D-2) was of an anion exchange type, and the viscosity after 6 months of storage at 5°C was clearly higher than the initial viscosity and the hardness after 6 months of storage at 5°C was clearly reduced compared to the initial viscosity. In Comparative Example 4, the component (D) was not contained, and the viscosity after 6 months of storage at 5°C was clearly higher than the initial viscosity and the hardness after 6 months of storage at 5°C was clearly reduced compared to the initial viscosity. In Comparative Example 5, the average particle sizes of the component (C-3) and the component (C-4) were both small, making kneading impossible, and it was not possible to measure the viscosity, thermal conductivity, and hardness. In Comparative Example 6, the component (B) and the component (C) were contained in a volume ratio (B):(C) of 9.6:0.4, with the proportion of B being large, making kneading impossible, and it was not possible to measure the viscosity, thermal conductivity, and hardness. In Comparative Example 7, the component (C-I) and the component (C-II) were contained in a volume ratio (C-I):(C-II) of 1.8:8.2, with the proportion of (C-I) being small, making kneading impossible, and it was not possible to measure the viscosity, thermal conductivity, and hardness. In Comparative Example 8, the component (C-I) and the component (C-II) were contained in a volume ratio (C-I):(C-II) of 8.2:1.8, with the proportion of (C-I) being large, resulting in a low thermal conductivity.

[Table 3]

| Amount contained (parts by mass) | | Example 1 | Example 2 | Example 3 | Example 4 | Example 5 | Example 6 | Example 7 |
|---|---|---|---|---|---|---|---|---|
| (A) | A-1 | 20 | 20 | 20 | 20 | 20 | 20 | 20 |
| | A-2 | | 1.00 | 1. 00 | 1.00 | 1. 00 | 1.00 | 1.00 |
| | A-3 | | 1.00 | 1. 00 | 1.00 | 1.00 | 1.00 | 1.00 |
| (B) | B-1 | 790 | 800 | | 435 | | | |
| | B-2 | | | 800 | 435 | 800 | 800 | 1,350 |
| (C) | C-1 | 395 | 400 | 400 | 435 | 240 | 560 | 86 |
| | C-2 | 395 | 400 | 400 | 435 | 560 | 240 | 86 |
| (D) | D-1 | 0.1 | 0.1 | 0.1 | 0.1 | 0.1 | 0.1 | 0.1 |
| (E) | E-1 | 80 | 80 | 80 | 80 | 80 | 80 | 80 |
| (F) | F-1 | 3 | | | | | | |
| (G) | G-1 | 0.5 | 0.5 | 0.5 | 0.5 | 0.5 | 0.5 | 0.5 |
| | G-2 | 2.7 | 2.7 | 2.7 | 2.7 | 2.7 | 2.7 | 2.7 |
| (H) | H-1 | 0.3 | 0.3 | 0.3 | 0.3 | 0.3 | 0.3 | 0.3 |
| (I) | I-1 | 0.1 | 0.1 | 0.1 | 0.1 | 0.1 | 0.1 | 0.1 |
| Amount of components (B) and (C) contained (% by volume) | | 80.0 | 80.0 | 80.0 | 81.3 | 80.0 | 80.0 | 80.2 |
| (B)/(C) volume ratio | | 5.4/4.6 | 5.4/4.6 | 5.4/4.6 | 5.4/4.6 | 5.4/4.6 | 5.4/4.6 | 9.0/1.0 |
| (C-1)/(C-2) volume ratio | | 5/5 | 5/5 | 5/5 | 5/5 | 3/7 | 7/3 | 5/5 |
| Parts by mass of (E) based on 100 parts by mass of (A) | | 364 | 364 | 364 | 364 | 364 | 364 | 364 |
| (A) % by mass | | 1.3 | 1.3 | 1.3 | 1.2 | 1.3 | 1.3 | 1.4 |
| (F) % by mass | | 0. 18 | | | | | | |
| (I) % by mass | | 0.006 | 0.006 | 0.006 | 0.005 | 0.006 | 0.006 | 0.006 |
| Viscosity (Pa·s): initial | | 255 | 225 | 204 | 165 | 522 | 378 | 571 |
| Hardness (Asker C): initial | | 33 | 32 | 30 | 33 | 34 | 31 | 27 |
| Thermal conductivity (W/m·K): initial | | 7.2 | 7.2 | 7.7 | 8.2 | 7.2 | 7.1 | 8.8 |
| Viscosity (Pa·s): after 6 months of storage at 5°C | | 253 | 229 | 206 | 169 | 515 | 387 | 584 |
| Hardness (Asker C): after 6 months of storage at 5°C | | 33 | 33 | 29 | 31 | 33 | 30 | 27 |
| Thermal conductivity (W/m·K): after 6 months of storage at 5°C | | 7.2 | 7.2 | 7.7 | 8.2 | 7.2 | 7.1 | 8.8 |

[Table 4]

| Amount contained (parts by mass) | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| (A) | A-1 | 20 | 20 | 20 | 20 | 20 | 20 | 20 | 20 |
| | A-2 | 1.00 | 1. 00 | 1. 00 | 1.00 | 1. 00 | 1. 00 | 1.00 | 1.00 |
| | A-3 | 1.00 | 1.00 | 1. 00 | 1.00 | 1. 00 | 1. 00 | 1. 00 | 1.00 |
| (B) | B-1 | | | 800 | 800 | | | | |
| | B-2 | | | | | 800 | 1,434 | 800 | 800 |
| | B-3 | 800 | | | | | | | |
| | B-4 | | 800 | | | | | | |
| (C) | C-1 | 400 | 400 | 400 | 400 | | 37 | 144 | 656 |
| | C-2 | 400 | 400 | 400 | 400 | | 37 | 656 | 144 |
| | C-3 | | | | | 400 | | | |
| | C-4 | | | | | 400 | | | |
| (D) | D-1 | 0.1 | 0.1 | | | 0.1 | 0.1 | 0.1 | 0.1 |
| | D-2 | | | 0.1 | | | | | |
| (E) | E-1 | 80 | 80 | 80 | 80 | 80 | 80 | 80 | 80 |
| (G) | G-1 | 0.5 | 0.5 | 0.5 | 0.5 | 0.5 | 0.5 | 0.5 | 0.5 |
| | G-2 | 2.7 | 2.7 | 2.7 | 2.7 | 2.7 | 2.7 | 2.7 | 2.7 |
| (H) | H-1 | 0.3 | 0.3 | 0.3 | 0.3 | 0.3 | 0.3 | 0.3 | 0.3 |
| (I) | I-1 | 0.1 | 0.1 | 0.1 | 0.1 | 0.1 | 0.1 | 0.1 | 0.1 |
| Amount of components (B) and (C) contained (% by volume) | | 80.0 | 80.0 | 80.0 | 80.0 | 80.0 | 80.2 | 80.0 | 80.0 |
| (B)/(C) volume ratio | | 5.4/4.6 | 5.4/4.6 | 5.4/4.6 | 5.4/4.6 | 5.4/4.6 | 9.6/0.4 | 5.4/4.6 | 5.4/4.6 |
| (C-1)/(C-2), or (C-3)/(C-4) volume ratio | | 5/5 | 5/5 | 5/5 | 5/5 | 5/5 | 5/5 | 1.8/8.2 | 8.2/1.8 |
| Parts by mass of (E) based on 100 parts by mass of (A) | | 364 | 364 | 364 | 364 | 364 | 364 | 364 | 364 |
| (A) % by mass | | 1.3 | 1.3 | 1.3 | 1.3 | 1.3 | 1.4 | 1.3 | 1.3 |
| (I) % by mass | | 0.006 | 0.006 | 0.006 | 0.006 | 0.006 | 0.006 | 0.006 | 0.006 |

(continued)

| Amount contained (parts by mass) | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| Viscosity (Pa·s): initial | 318 | 430 | 214 | 230 | | | | 591 |
| Hardness (Asker C): initial | 35 | 32 | 30 | 31 | | | | 27 |
| Thermal conductivity (W/m·K): initial | 6.0 | 6.4 | 7.2 | 7.2 | | | | 6.7 |
| Viscosity (Pa·s): after 6 months of storage at 5°C | 321 | 436 | 332 | 356 | * | * | * | 599 |
| Hardness (Asker C): after 6 months of storage at 5°C | 33 | 31 | 10 | 9 | | | | 27 |
| Thermal conductivity (W/m·K): after 6 months of storage at 5°C | 6.0 | 6.4 | 7.2 | 7.2 | | | | 6.7 |

*: Unmeasurable since kneading was not possible.

The present description includes the following embodiments.

[1]: A highly thermally conductive silicone composition comprising:

(A) an organopolysiloxane;
(B) a spherical magnesium oxide powder with an average sphericity of 0.8 or more, an average particle size of 80 to 150 μm, and a purity of 98% by mass or more;
(C) a thermally conductive filler comprising (C-I) and (C-II), and the following component (C-I) and component (C-II) being contained in a volume ratio (C-I):(C-II) of 2:8 to 8:2,

(C-I) a spherical aluminum oxide powder with an average sphericity of 0.8 or more and an average particle size of 7 to 60 μm, a proportion of coarse particles of 96 to 150 μm being 0.1 to 30% by mass of an entirety of the component (C-I) in a laser diffraction type particle size distribution; and
(C-II) a spherical or irregularly shaped aluminum oxide powder with an average particle size of 0.1 to 4 μm; and

(D) a cation exchange and/or amphoteric ion exchange type ion-trapping agent, at least one element selected from Zr, Bi, Sb, Mg, and Al being supported on the ion-trapping agent,

wherein the component (B) is 3,300 to 6,500 parts by mass based on 100 parts by mass of the component (A), the component (D) is 0.01 to 10 parts by mass based on 100 parts by mass of the component (A),
the component (B) and the component (C) are contained in a volume ratio (B):(C) of 5:5 to 9.5:0.5, and a total amount of the component (B) and the component (C) is 80 to 90% by volume in the composition, and
the composition has a thermal conductivity of 7.0 W/m·K or more in a Hot Disk method in accordance with ISO 22007-2, and the composition has a viscosity of 30 to 800 Pa·s at 25°C as measured with a spiral viscometer at a rotational speed of 10 rpm.

[2]: The highly thermally conductive silicone composition of the above [1], wherein 1 to 6% by mass of the component (A) is contained in the composition.
[3]: The highly thermally conductive silicone composition of the above [1] or [2], wherein the component (A) is of an addition reaction curable type containing (A-I) an organopolysiloxane having 0.1 or more silicon atom-bonded alkenyl groups on average in one molecule, of a condensation reaction curable type containing (A-II) an organopolysiloxane having at least 2 silanol groups or silicon atom-bonded hydrolyzable groups in one molecule as the component (A), or of an organic peroxide curable type containing (A-III) an organopolysiloxane having at least 1 silicon atom-bonded alkenyl group in one molecule as the component (A).
[4]: The highly thermally conductive silicone composition of the above [1] to [3], further comprising (E) a surface treatment agent.
[5]: The highly thermally conductive silicone composition of the above the above [4], wherein

(A-I) an organopolysiloxane having 0.1 or more silicon atom-bonded alkenyl groups on average in one molecule or (A-III) an organopolysiloxane having at least 1 silicon atom-bonded alkenyl group in one molecule is contained as the component (A), and
5 to 900 parts by mass of an organopolysiloxane containing at least 1 silyl group represented by the following general formula (1) in one molecule and having a viscosity of 0.01 to 30 Pa·s at 25°C is contained as the component (E) based on 100 parts by mass of the component (A-I) or (A-III):

$$-SiR^1_a(OR^2)_{3-a} \qquad (1)$$

wherein $R^1$ is independently an unsubstituted or substituted monovalent hydrocarbon group, $R^2$ is independently an alkyl group, an alkoxyalkyl group, an alkenyl group, or an acyl group, and "a" is 0, 1, or 2.

[6]: The highly thermally conductive silicone composition of the above [1] to [5], further comprising 0.01 to 10% by mass of (F) spherical glass beads or irregularly shaped glass having a maximum value of a median particle size of 160 μm or more and a $SiO_2$ content of 50% by mass or more, in an entire amount of the composition.
[7]: A cured product of the highly thermally conductive silicone composition of the above [1] to [6].

Note that the present invention is not limited to the embodiments described above. The embodiments described above are illustrations, and any embodiments having substantially the same feature as and providing similar functions and

effects to the technical concept described in the claims of the present invention are encompassed in the technical scope of the present invention.

## Claims

1. A highly thermally conductive silicone composition comprising:

(A) an organopolysiloxane;
(B) a spherical magnesium oxide powder with an average sphericity of 0.8 or more, an average particle size of 80 to 150 μm, and a purity of 98% by mass or more;
(C) a thermally conductive filler comprising (C-I) and (C-II), and the following component (C-I) and component (C-II) being contained in a volume ratio (C-I):(C-II) of 2:8 to 8:2,

(C-I) a spherical aluminum oxide powder with an average sphericity of 0.8 or more and an average particle size of 7 to 60 μm, a proportion of coarse particles of 96 to 150 μm being 0.1 to 30% by mass of an entirety of the component (C-I) in a laser diffraction type particle size distribution; and
(C-II) a spherical or irregularly shaped aluminum oxide powder with an average particle size of 0.1 to 4 μm; and

(D) an ion-trapping agent comprising either or both of a cation exchange type ion-trapping agent and an amphoteric ion exchange type ion-trapping agent, one or more elements selected from Zr, Bi, Sb, Mg, and Al being supported on the ion-trapping agent,

wherein the component (B) is 3,300 to 6,500 parts by mass based on 100 parts by mass of the component (A),
the component (D) is 0.01 to 10 parts by mass based on 100 parts by mass of the component (A),
the component (B) and the component (C) are contained in a volume ratio (B):(C) of 5:5 to 9.5:0.5, and a total amount of the component (B) and the component (C) is 80 to 90% by volume in the composition, and
the composition has a thermal conductivity of 7.0 W/m·K or more in a Hot Disk method in accordance with ISO 22007-2, and the composition has a viscosity of 30 to 800 Pa·s at 25°C as measured with a spiral viscometer at a rotational speed of 10 rpm.

2. The highly thermally conductive silicone composition according to claim 1, wherein 1 to 6% by mass of the component (A) is contained in the composition.

3. The highly thermally conductive silicone composition according to claim 1, wherein the component (A) is of an addition reaction curable type containing (A-I) an organopolysiloxane having 0.1 or more silicon atom-bonded alkenyl groups on average in one molecule, of a condensation reaction curable type containing (A-II) an organopolysiloxane having 2 or more silanol groups or silicon atom-bonded hydrolyzable groups in one molecule as the component (A), or of an organic peroxide curable type containing (A-III) an organopolysiloxane having 1 or more silicon atom-bonded alkenyl groups in one molecule as the component (A).

4. The highly thermally conductive silicone composition according to claim 1, further comprising (E) a surface treatment agent.

5. The highly thermally conductive silicone composition according to claim 4, wherein

(A-I) an organopolysiloxane having 0.1 or more silicon atom-bonded alkenyl groups on average in one molecule or (A-III) an organopolysiloxane having 1 or more silicon atom-bonded alkenyl groups in one molecule is contained as the component (A), and
5 to 900 parts by mass of an organopolysiloxane containing 1 or more silyl groups represented by the following general formula (1) in one molecule and having a viscosity of 0.01 to 30 Pa·s at 25°C is contained as the component (E) based on 100 parts by mass of the component (A-I) or (A-III):

$$-SiR^1_a(OR^2)_{3-a} \qquad (1)$$

wherein $R^1$ is independently an unsubstituted or substituted monovalent hydrocarbon group, $R^2$ is independently an alkyl group, an alkoxyalkyl group, an alkenyl group, or an acyl group, and "a" is 0, 1, or 2.

**6.** The highly thermally conductive silicone composition according to claim 1, further comprising 0.01 to 10% by mass of (F) spherical glass beads or irregularly shaped glass having a maximum value of a median particle size of 160 μm or more and a $SiO_2$ content of 50% by mass or more, in an entire amount of the composition.

**7.** A cured product of the highly thermally conductive silicone composition according to any one of claims 1 to 6.

## INTERNATIONAL SEARCH REPORT

International application No. **PCT/JP2024/001369**

### A. CLASSIFICATION OF SUBJECT MATTER

***C08L 83/04***(2006.01)i; ***C08K 3/105***(2018.01)i; ***C08L 83/05***(2006.01)i; ***C08L 83/07***(2006.01)i
FI: C08L83/04; C08K3/105; C08L83/05; C08L83/07

According to International Patent Classification (IPC) or to both national classification and IPC

### B. FIELDS SEARCHED

Minimum documentation searched (classification system followed by classification symbols)

C08L83/04; C08K3/105; C08L83/05; C08L83/07

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2020/261958 A1 (SHIN-ETSU CHEMICAL CO., LTD.) 30 December 2020 (2020-12-30) claims 1-8, paragraph [0013], tables 3, 4 | 1-7 |
| Y | WO 2021/240987 A1 (SHIN-ETSU CHEMICAL CO., LTD.) 02 December 2021 (2021-12-02) claim 1, paragraph [0011], table 1 | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/001369**

| Patent document cited in search report | Publication date (day/month/year) | Patent family member(s) | Publication date (day/month/year) |
|---|---|---|---|
| WO 2020/261958 A1 | 30 December 2020 | US 2022/0372359 A1<br>claims 1-8, paragraph [0022], tables 3, 4<br>EP 3988607 A1<br>CN 113993939 A<br>KR 10-2022-0024818 A | |
| WO 2021/240987 A1 | 02 December 2021 | US 2023/0212396 A1<br>claim 7, paragraph [0013], table 1<br>EP 4159805 A1<br>CN 115667409 A<br>KR 10-2023-0015925 A<br>TW 202144506 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005162555 A
- JP 2003342021 A
- JP 2002280498 A
- JP 2005209765 A
- JP 5755977 B
- WO 2002092693 A1
- JP H5239358 A
- JP H7292251 A
- JP H888488 A
- JP 6075261 B
- WO 2020261958 A1